# EUROPÄISCHE PATENTSCHRIFT

(11) **EP 3 297 757 B1**
(45) Veröffentlichungstag und Bekanntmachung des Hinweises auf die Patenterteilung: **15.07.2020**
(21) Anmeldenummer: 16723247.9
(22) Anmeldetag: 02.05.2016
(51) Int. Cl.: B01J 20/26, B01D 15/08, B01J 20/285, B01J 20/28

(54) **CHROMATOGRAPHIESÄULE UND IHRE VERWENDUNG**
CHROMATOGRAPHIC COLUMN AND ITS USE
COLONNE CHROMATOGRAPHIQUE ET SON UTILISATION

(30) Priorität: 22.05.2015 EP 15001559
(43) Veröffentlichungstag der Anmeldung: 28.03.2018
(73) Patentinhaber: Merck Patent GmbH, 64293 Darmstadt (DE)
(72) Erfinder: CABRERA, Karin, 63303 Dreieich (DE); KREHER, Klaus, 64839 Muenster (DE); JUNG, Gisela, 64331 Weiterstadt (DE)
(86) Internationale Anmeldenummer: PCT/EP2016/000718
(87) Internationale Veröffentlichungsnummer: WO 2016/188606

(56) Entgegenhaltungen:
- WO-A1-97/17664
- DE-A1- 10 016 825
- DE-A1- 19 946 674
- US-A1- 2010 326 919
- FEE CONAN ET AL: "3D printed porous media columns with fine control of column packing morphology", JOURNAL OF CHROMATOGRAPHY, ELSEVIER SCIENCE PUBLISHERS B.V, NL, Bd. 1333, 24. Januar 2014 (2014-01-24), Seiten 18-24, XP028660888, ISSN: 0021-9673, DOI: 10.1016/J.CHROMA.2014.01.043
- Eos Gmbh: "Plastic Laser Sintering System EOSINT P 800 Processing High Performance Polymers Operating at up to 385° C", , 1. Mai 2014 (2014-05-01), XP055288979, Gefunden im Internet: URL:https://scrivito-public-cdn.s3-eu-west -1.amazonaws.com/eos/public/446f91c814dfcd ab/a552e77d1c5c6656a3cdf3d4ba20c741/EOS_da tasheet_EOSINT_P800.pdf [gefunden am 2016-07-15]
- VIGNESH RAJAMANICKAM ET AL: "Monoliths in Bioprocess Technology", CHROMATOGRAPHY, Bd. 2, Nr. 2, 17. April 2015 (2015-04-17), Seiten 195-212, XP055264983, DOI: 10.3390/chromatography2020195

## Beschreibung

Die Erfindung betrifft Vorrichtungen für die Stofftrennung enthaltend monolithische Materialien, die mittels 3D Druck herstellbar sind. Sie bestehen aus Druck-und Lösungsmittel-stabilen thermoplastischen Kunststoffen.

Monolithische Materialien kommen z.B. in der Chromatographie als Chromatographiesäule zum Einsatz. Sie kommen auch in anderen Bereichen der Stofftrennung zum Einsatz, wie z.B. in der Probenvorbereitung und Extraktion. Zur Herstellung konventioneller Chromatographiesäulen mit partikulären Sorbenzien wird das Füllmaterial in ein Edelstahl- oder Kunststoffrohr mit passgenauen Enden gefüllt. Dabei wird erreicht, dass das Sorbensbett am Mantel der Säule dicht anliegt und die Partikel homogen über den gesamten Querschnitt der Säule verteilt sind.

Konventionelle Materialien für die Probenvorbereitung bestehen ebenfalls aus einem partikulären Füllmaterial, welches in geeignete Kunststoffkartuschen, Edelstahlrohre oder andere Vorrichtungen, wie z.B. sogenannte 96 well plates, gegeben wird. Die Füllmaterialien bestehen aus anorganischen oder organisch polymeren Partikeln.

Ersetzt man, wie es z.B. in WO 94/19 687 und in WO 95/03 256 offenbart ist, partikuläre durch monolithische Sorbenzien, so ergeben sich durchgehende, 3-dimensionale, poröse Formkörper, auch poröse monolithische Formkörper genannt, die für die chromatographische Trennung oder Probenvorbereitung eingesetzt werden können. Zum Einsatz in chromatographischen Trennungen werden die Formkörper mit einer flüssigkeitsdichten und druckstabilen Ummantelung versehen. Nur so ist gewährleistet, dass Probe und Elutionsmittel ausschließlich durch das Sorbens transportiert werden. Das Gleiche gilt auch für Anwendungen in der Probenvorbereitung.

Die Güte einer monolithischen Säule für die HPLC kann über die Trennleistung (N/m) einerseits und über die Peaksymmetrie andererseits beschrieben werden. Die Peakform entspricht im Idealfall einer Gauss'schen Glockenform. Abweichungen von dieser symmetrischen Form führen zu einem "fronting" oder zu einem "tailing".

Es wurde nun vorgeschlagen, die Technik des 3-D Druckens, auch additive manufacturing oder prototyping genannt, als Verfahren zur Herstellung von monolithischen Sorbenzien für die Chromatographie und Probenvorbereitung einzusetzen. Conan Fee et al., Journal of Chromatography A, 1333 (2014) 18-24 zeigen erste poröse Formkörper mit Poren, die sie zum Einsatz in der Chromatographie vorschlagen. Eine Stofftrennung konnte jedoch nicht gezeigt werden. Nur die Verzögerung der Elution einzelner Verbindungen wird offenbart.

WO 97/17664 A1 offenbart mittels 3D Druck hergestellte poröse Körper mit Ummantelung, die aus Polyester hergestellt sind.

US 2010/326919 offenbart eine nicht mittels 3D Druck hergestellte monolithische Trennsäule aus Polyamiden.

DE 19946674 offenbart mittels eines Matrizenformkörpers hergestellte Polymerformkörper zum Einsatz in Trennsäulen.

DE 10016825 beschreibt Ummantelungen für monolithische Chromatographiesäulen aus faserverstärktem PEEK.

Aufgabe der vorliegenden Erfindung war es daher, mittels 3 D Druckverfahren herstellbare Formkörper zur Verfügung zu stellen, die für verschiedene Anwendungen der Stofftrennung unter Verwendung einer großen Auswahl von organischen und wässrigen Lösungsmitteln geeignet sind. Insbesondere sollten derart hergestellte Formkörper auch eine chromatographische Trennung von zwei oder mehreren Verbindungen ermöglichen.

Es wurde gefunden, dass z.B. eine chromatographische Trennung erreicht werden kann, wenn die porösen Formkörper, die mittels 3D Druck herstellbar sind, aus bestimmten druck- und lösungsmittelstabilen Kunststoffen bestehen.

Gegenstand der vorliegenden Erfindung sind daher Vorrichtungen für die Stofftrennung in Form einer Chromatographiesäule zumindest umfassend einen porösen monolithischen Formkörper als Sorbens und eine Ummantelung zusammen aus einem thermoplastischen Polymer mittels 3D Druckverfahren hergestellt, wobei das thermoplastische Polymer Polyetheretherketon (PEEK) oder Polyphenylensulfid ist.

In einer bevorzugten Ausführungsform hat das thermoplastische Polymer einen Schmelzpunkt über 150°C.

In einer weiteren bevorzugten Ausführungsform enthält das thermoplastische Polymer Additive.

In einer bevorzugten Ausführungsform sind die Additive Fasermaterialien, anorganischen Materialien oder Pigmente, z.B. Kreide, Talkum, Glimmer oder anorganische Oxide, wie Siliziumdioxid, Aluminiumoxid, Siliciumcarbid, Glas- oder Kohlefasern, bevorzugt Siliziumdioxid, Aluminiumoxid, Titandioxid, Zirkonoxid, oder Siliciumcarbid oder Mischungen davon, besonders bevorzugt Siliziumdioxid.

In einer Ausführungsform ist die Ummantelung ein Rohr, das den porösen säulenförmigen Formkörper umschließt.

In einer bevorzugten Ausführungsform weist der poröse monolithische Formkörper eine bimodale oder oligomodale Porenverteilung auf.

In einer besonders bevorzugten Ausführungsform weist der poröse monolithische Formkörper Makroporen mit einem Durchmesser zwischen 0,1 und 10000 µm auf, die als Durchflussporen dienen, sowie Mesoporen mit einem Porendurchmesser zwischen 2 und 500 nm.

Gegenstand der vorliegenden Erfindung ist auch die Verwendung einer erfindungsgemäßen Vorrichtung zur Auftrennung mindestens zweier Stoffe.

In einer bevorzugten Ausführungsform wird eine Chromatographiesäule zur chromatographischen Auftrennung mindestens zweier Stoffe verwendet.

In einer Ausführungsform erfolgt die chromatographische Trennung bei Temperaturen über 30°C.

Gegenstand der vorliegenden Erfindung ist auch ein Verfahren zur chromatographischen Auftrennung mindestens zweier Stoffe, wobei die Probe enthaltend die zu trennenden Stoffe auf eine erfindungsgemäße Chromatographiesäule gegeben wird, diese nach der Probenaufgabe mit einem Elutionsmittel gespült wird und die bei der Behandlung mit dem Elutionsmittel unterschiedlich stark auf dem Sorbens zurückgehaltenen Stoffe nacheinander eluiert und so getrennt werden. Die erfindungsgemäße Chromatographiesäule kann dabei alle vorab oder nachfolgend offenbarten Eigenschaften aufweisen.

Abbildungen 1 bis 3 sowie 8 bis 10 zeigen schematisch Ausschnitte der zum 3D Druck verwendeten CAD Files. Nähere Angaben finden sich in den Beispielen 2 und 7.

Die Abbildung 4 zeigt Chromatogramme einer mit einer erfindungsgemäßen Säule durchgeführten Trennung im Vergleich zu einer Trennung mit einer herkömmlichen monolithischen Chromatographiesäule. Nähere Angaben finden sich in Beispiel 3.

Die Abbildungen 5 bis 7 und 11 zeigen Chromatogramme, die beim Einsatz der erfindungsgemäßen Chromatographiesäulen unter verschiedenen Bedingungen erhalten wurden. Nähere Angaben finden sich in den Beispielen 4 bis 6 und 8.

Vorrichtungen für die Stofftrennung umfassen zumindest ein monolithisches, poröses Sorbens, auch Formkörper genannt, und bevorzugt eine Ummantelung, die dafür sorgt, dass die aufzutrennende Probe, optionale Fließmittel, Waschlösungen etc. durch das poröse Sorbens fließen. Die Ummantelung kann beispielsweise eine Kartusche, ein Rohr oder eine andere Vorrichtung sein, wie eine Pipettenspitze oder sogenannte Well Platten, z.B. eine 96 Well Platte. Stofftrennung bedeutet erfindungsgemäß, dass zwei Komponenten bzw. Stoffe in einer Probe voneinander getrennt werden. Dies kann durch eine chromatographische Auftrennung erfolgen oder beispielsweise durch Extraktion wie SPE (Solid Phase Extraction) oder SPME (Solid Phase Microextraction).

Chromatographiesäulen umfassen erfindungsgemäß zumindest ein monolithisches, poröses Sorbens, auch Formkörper genannt, und eine Ummantelung, die dafür sorgt, dass z.B. das Fließmittel durch das poröse Sorbens fließt. Dem Fachmann sind Chromatographiesäulen, ihr Aufbau und ihre Verwendung bekannt. Typischerweise haben sie zusätzlich Anschlüsse für den Zu- und Ablauf von Probe, Fließmittel etc.

Die erfindungsgemäße Chromatographiesäule umfasst zumindest einen porösen, monolithischen Formkörper aus einem thermoplastischen Polymer, der mittels 3D Druckverfahren hergestellt wurde und eine Ummantelung.

Die porösen, monolithischen Formkörper, im Folgenden auch poröser Formkörper oder Formkörper genannt, können jede beliebige Form aufweisen. Bevorzugt sind sie säulenförmig, d.h. zylindrisch. Typische Durchmesser liegen zwischen 0,5 mm und 20 cm.

Eine Ummantelung ist erfindungsgemäß eine Hülle, die den porösen Formkörper zumindest teilweise umschließt. Handelt es sich bei dem Formkörper um einen säulenförmigen Formkörper, so umschließt die Ummantelung typischerweise die gesamte Mantelfläche der Säule. An den beiden Enden befinden sich typischerweise Anschlussmöglichkeiten für Lösungsmittelzu- und ablauf zu dem als Sorbens dienenden porösen Formkörper.

Erfindungsgemäß kann jede für monolithische Chromatographiesäulen bekannte Ummantelung z.B. aus Kunststoff, Edelstahl und/oder Glas verwendet werden. Die Ummantelung kann mittels herkömmlicher Verfahren zur Ummantelung monolithischer Chromatographiesäulen, wie beispielsweise beschrieben in EP 0990153, US 6,863,820 oder WO 2008/098659, auf den Formkörper aufgebracht werden. Bevorzugt wird die Ummantelung jedoch zusammen mit dem porösen Formkörper mittels 3D Druckverfahren hergestellt und ist aus demselben Material wie der poröse Formkörper. Im 3D Druckverfahren können zugleich die Anschlüsse, z.B. Schraubgewinde, für Lösungsmittelzu- und ablauf zu dem porösen Formkörper mit eingebracht werden.

In einer Ausführungsform hat die Ummantelung die Form eines unporösen Rohrs, das den säulenförmigen porösen Formkörper umschließt. In einer anderen Ausführungsform hat die Ummantelung eine andere Form, z.B. die Form eines Quaders oder einer Platte, in die der poröse Formkörper eingebracht ist. Insbesondere, wenn die Ummantelung mit dem porösen Formkörper zusammen mittels 3D Druckverfahren hergestellt wird, kann die Form der Ummantelung beliebig gewählt werden. Eine neben dem klassischen Rohr bevorzugte Ausführungsform ist die einer Platte, Karte oder eines flachen Formkörpers. Derartige Formkörper werden auch Chips genannt. Erfindungsgemäß wird dabei der poröse Formkörper von einem unporösen flachen Formkörper umschlossen. Typischerweise befinden sich in dem flachen Formkörper Anschlüsse für Lösungsmittelzu- und ablauf zu dem porösen Formkörper. Bei erfindungsgemäßen Vorrichtungen in Form von Chips kann das Sorbens, also der poröse Formkörper, beispielsweise säulenförmig in die Ummantelung eingebracht sein, es können zwei oder mehr unabhängige säulenförmige poröse Formkörper eingebracht sein oder poröse Formkörper, die sich ein oder mehrfach verzweigen. Der poröse Formkörper ist dann typischerweise wie ein gerader, gebogener oder sich verzweigender Kanal in die Ummantelung eingebracht.

Die porösen Formkörper weisen erfindungsgemäß eine monomodale, bimodale oder oligomodale Porenstruktur auf. Bevorzugt weisen sie zumindest Makroporen mit einem Durchmesser größer 0,1 µm auf, die als Durchflussporen dienen. Typischerweise weisen die Makroporen Durchmesser zwischen 0,1 und 10000 µm auf, bevorzugt zwischen 0,5 und 1000 µm. In einer bevorzugten Ausführungsform weist der Formkörper eine bimodale oder oligomodale Porenverteilung auf, bei der zusätzlich zu den Makroporen noch z.B. Mesoporen mit einem Porendurchmesser zwischen 2 und 500 nm, bevorzugt zwischen 5 und 100 nm, vorhanden sind. In einer besonders bevorzugten Ausführungsform befinden sich die Mesoporen in den Wänden der Makroporen und vergrößern so die Oberfläche des Formkörpers.

Durchflussporen sind Poren oder Kanäle, die den Durchfluss von z.B. einer Flüssigkeit oder einem Gas durch einen Formkörper erlauben. Dabei kann die Flüssigkeit an einer Stelle in den Formkörper eintreten und an einer anderen Stelle wieder austreten. Bei säulenförmigen Formkörpern tritt die Flüssigkeit bevorzugt an einem Ende der Säule ein und am anderen wieder aus. Dementsprechend sind Poren, die sich nur in Form einer Einkerbung in der Oberfläche eines Formkörpers befinden, keine Durchflussporen.

Die Durchmesser der Makroporen werden typischerweise mittels Quecksilberporosimetrie gemessen während die der Mesoporen mittels Stickstoffadsorption/desorption nach BET ermitteln werden.

Das Gesamtporenvolumen der erfindungsgemäßen Formkörper liegt typischerweise zwischen 0,5mL/g und 10mL/g, bevorzugt zwischen 1mL/g und 8mL/g. Die Oberfläche der erfindungsgemäßen Formkörper liegt typischerweise zwischen 1m²/g und 750m²/g, bevorzugt zwischen 10m²/g und 500m²/g.

3D Drucken ist eine Technologie, mit der dreidimensionale Formkörper schichtweise aufbaut werden. Der Aufbau erfolgt in der Regel computergesteuert nach aus einem virtuellen Modell vorgegebenen Maßen und Formen (CAD = computer aided design). Mittels CAD wird typischerweise ein Schichtbild des gewünschten Formkörpers in digitalisierter Form erstellt. Dazu werden typischerweise poröse Scheibenelemente mittels geeigneter Software am Bildschirm konstruiert. Diese porösen Scheibenelemente werden dann übereinander angeordnet bis sie einen porösen monolithischen Formkörper mit definierter Dimension (z.B. 50x3mm oder 100x4,6mm) ergeben. Der 3D Druck kann mit einem oder mehreren flüssigen oder festen Stoffen durchgeführt werden. Beim schichtweisen Aufbau finden physikalische oder chemische Härtungs- oder Schmelzprozesse an den Stellen jeder Schicht statt, die verfestigt bzw. verbunden werden sollen. Der 3D-Druck ist ein generatives Fertigungsverfahren.

Das Prinzip und die Durchführung des 3D Drucks sind dem Fachmann bekannt.

Die wichtigsten Techniken des 3D-Druckens sind das selektive Laserschmelzen und das Elektronenstrahlschmelzen, die insbesondere für Metalle geeignet sind, und das selektive Laser-Sintern für Polymere, Keramik und Metalle, die Stereolithografie und das Digital Light Processing für flüssige Kunstharze und das Polyjet-Modeling, auch Multijet-Modeling genannt, sowie das Fused Deposition Modeling für Kunststoffe und teilweise Kunstharze. Bevorzugt werden die erfindungsgemäßen porösen monolithischen Formkörper mittels Stereolithografie, selektivem Laser-Sintern oder Polyjet-Modeling gefertigt.

In der Stereolithographie wird typischerweise ein lichtaushärtendes Material mit einem fokussierten Laser bestrahlt. Das Material, zum Beispiel Epoxidharz, wird von einem Laser in dünnen Schichten (Standardschichtstärke im Bereich 0,05-0,25 mm, bei Mikrostereolithografie auch bis zu 1-Mikrometerschichten) ausgehärtet. Die Prozedur geschieht in einem Bad, das mit den Basismonomeren des lichtempfindlichen (photosensitiven) Materials, typischerweise eines Kunststoffs, gefüllt ist. Nach jedem Schritt wird das Werkstück einige Millimeter in die Flüssigkeit abgesenkt und auf eine Position zurückgefahren, die um den Betrag einer Schichtstärke unter der vorherigen liegt. Der flüssige Kunststoff über dem Teil wird dann durch einen Wischer gleichmäßig verteilt. Dann fährt ein Laser, der von einem Computer über bewegliche Spiegel gesteuert wird, auf der neuen Schicht über die Flächen, die ausgehärtet werden sollen. Nach dem Aushärten erfolgt der nächste Schritt, so dass nach und nach ein dreidimensionales Modell entsteht.

Beim selektivem Laser-Sintern erfolgt der Aufbau des dreidimensionalen Formkörpers aus einem pulverförmigen Werkstoff. Zunächst wird eine dünne Schicht des Pulverwerkstoffs auf eine Bauplattform aufgetragen. Der Auftrag kann z.B. mittels Rakel oder Walze erfolgen. Ein starker Laserstrahl, z.B. CO₂-Laser, ein Nd:YAG-Laser oder ein Faserlaser, schmilzt das Pulver exakt an den Stellen auf, die die computergenerierten Bauteil-Konstruktionsdaten (CAD File) vorgeben. Danach senkt sich die Fertigungsplattform ab und es erfolgt ein weiterer Pulverauftrag. Der Werkstoff wird erneut aufgeschmolzen und verbindet sich an den definierten Stellen mit der darunterliegenden Schicht.

Beim Polyjet-Modeling wird der dreidimensionale Formkörper durch einen oder mehrere Druckköpfe mit bevorzugt mehreren linear angeordneten Düsen, die ähnlich wie der Druckkopf eines Tintenstrahldruckers funktionieren, schichtweise aufgebaut.

Als Ausgangsmaterial sind flüssige oder verflüssigbare Stoffe wie Hartwachse oder spezielle wachsähnliche Thermoplaste sowie schmelzfähige Kunststoffe geeignet.

Eine Variante des Multi Jet Modelling ist es, einen Klebstoff im Tintenstrahlverfahren auf ein pulvriges Substrat aufzubringen.

Dazu wird ähnlich dem selektiven Laser-Sintern in einer Wanne mit absenkbarem Boden Schicht für Schicht des Substrates auf den Boden aufgebracht. Nach jeder aufgebrachten Schicht wird dann der Klebstoff auf die Stellen gesprüht, die zum fertigen Modell gehören.

Bevorzugt erfolgt der 3D Druck erfindungsgemäß mittels selektivem Lasersintern.

Thermoplastische Polymere mit einem Schmelzpunkt von bevorzugt > 150°C, sind z.B. Polyarylate (Ardel), Polyetherketone (PEEK), Polyester (PET,PC, PBT), Polyamide (PA), Polyimide (PI), Polyetherimid (PEI) Polyamidimide (PAI) Polybenzimidazole (PBI), Polyphenylensulfide (PPS), Polyphenylsulfone (PSU, PPSU) oder Polyoxymethylen (POM) sowie Mischungen aus zwei oder mehreren dieser Materialien. In den Klammern sind jeweils geeignete Beispiele der jeweiligen Stoffgruppe angegeben.

Neben unterschiedlichen Viskositäten zeigen diese Materialien vor allem eine unterschiedliche chemische Stabilität, wie z.B. Lösungsmittelstabilität. Daher hängt die Wahl des geeigneten Kunststoffs auch von der später geforderten chemischen Stabilität ab. Es wurde gefunden, dass PEEK (Polyetheretherketon) oder Polyphenylensulfid (PPS) besonders vorteilhafte Eigenschaften bei der Herstellung der erfindungsgemäßen Vorrichtungen für die Stofftrennung in Form von Chromatographiesäulen und bei deren Einsatz zeigen. Diese Materialien sind auch insbesondere geeignet für die Anforderungen von Chromatographiesäulen bezüglich chemischer Stabilität und auch Druckstabilität.

Der Schmelzpunkt markiert den Übergang vom festen Aggregatzustand zu einem flüssigen oder erweichten Zustand.

Bei teilkristallinen Werkstoffen ist der Schmelzpunkt die Temperatur, bei welcher die kristalline Phase in den flüssigen Zustand übergeht. Der Schmelzpunkt von amorphen Stoffen ist die Temperatur, bei der der Stoff von der harten in eine flexible Phase übergeht, wobei die Molekülketten beweglich werden, ohne dass sich der Kunststoff direkt verflüssigt. Man nennt diese Temperatur auch Glasübergangstemperatur.

PEEK zeigt für die meisten Anwendungen eine ausreichende chemische Stabilität. Daher werden die folgenden Ausführungen teilweise auf PEEK als Materialbeispiel bezogen. Ein Fachmann ist jedoch in der Lage, die nachfolgende Offenbarung auf andere Kunststoffe mit anderer Viskosität, chemischer Stabilität etc. zu übertragen.

Es wurde gefunden, dass zu der chemischen Stabilität auch die Druckstabilität und Viskosität der Kunststoffe eine wichtige Rolle spielt. Bei zu geringer Viskosität des Kunststoffs zur Herstellung des porösen Formkörpers ist die mechanische Stabilität bei der Durchführung von insbesondere chromatographischen Trennungen nicht gegeben. Der poröse Formkörper verformt sich.

Typischerweise haben sich Kunststoffe mit einer Viskosität zwischen 1 und 700mL/ 10Min (MVI) als geeignet erwiesen. Bevorzugt eignen sich Kunststoffe mit einer Viskosität zwischen 5 und 550mL/ 10Min (MVI), besonders bevorzugt zwischen 10 und 350 mL/10 Min (MVI). Diese Kunststoffe können Additive enthalten oder nicht.

In einer bevorzugten Ausführungsform werden den Kunststoffen vor der Herstellung des porösen Formkörpers mittels 3D Druckverfahren Additive zugesetzt. Durch diese Additive kann die Viskosität der Kunststoffe beeinflusst, typischerweise erhöht, werden. Weiterhin wurde gefunden, dass durch den Zusatz von Additiven die Oberflächeneigenschaften der Kunststoffe verändert werden können. Beispielsweise zeigt PEEK als poröses Sorbens Trenneigenschaften, die einem reversed phase Material entsprechen. Wird PEEK ein Additiv in Form von SiO₂ Partikeln zugesetzt, so verringert sich der hydrophobe Charakter des Kunststoffs. Zudem entstehen durch die Si-OH Gruppen Anbindungsmöglichkeiten für funktionelle Gruppen. Außerdem kann man durch nachträgliches Herauslösen der SiO₂-Partikel unter Verwendung von alkalischen Lösungen (z.B. NaOH) eine weitere Porositätshierachie und somit Oberflächenvergrößerung im Gerüst der Formkörper aufbauen.

Erfindungsgemäß geeignete Additive sind z.B. Fasermaterialien, wie Glas- oder Kohlefasern, anorganischen Materialien oder Pigmente, z.B. Kreide, Talkum, Glimmer oder anorganische Oxide, wie Siliziumdioxid und Aluminiumoxid, oder Siliziumcarbid. Die Additive können z.B. als Fasern, unregelmäßig oder regelmäßig geformte Partikel zugegeben werden. Typischerweise liegt im Falle von regelmäßig oder unregelmäßig geformten Partikeln der größte Durchmesser der Partikel zwischen 1 und 25µm.

Erfindungsgemäß werden besonders bevorzugt Kunststoffe verwendet, die als Additive Siliziumdioxid, Aluminiumoxid, Titandioxid, Zirkonoxid, Siliziumcarbid oder Mischungen von zwei oder mehreren dieser Additive enthalten.

Kunststoffe weisen u.a. in Abhängigkeit ihres Vernetzungsgrades und ihrer Kettenlänge unterschiedliche Viskositäten auf. Durch einen Zusatz von Additiven, wie z.B. Fasern oder Partikeln, wird die Viskosität der Stoffe nochmals verändert. Sie werden deutlich zäher. Diese Aspekte müssen bei der Wahl eines erfindungsgemäß geeigneten Kunststoffes berücksichtigt werden.

Je mehr Additive den Kunststoffen zugesetzt werden, umso spröder werden sie. Bevorzugt wird den Kunststoffen ein Additivanteil zwischen 1 und 50 % (w/w), besonders bevorzugt zwischen 5 und 35% (w/w) zugesetzt.

Die Viskosität von Thermoplasten wird in der kunststoffverarbeitenden Industrie zumeist nach dem Volumenfließindex (MVI) nach DIN ISO 1133 bestimmt. Es wird in einer normierten Apparatur gearbeitet. Deren zentrale Bestandteile sind ein heizbarer, senkrecht stehender Zylinder (Innendurchmesser 9,55 mm) mit Austrittsdüse (Innendurchmesser 2, mm, Länge 8,00 mm) und ein passender Kolben mit (von der Apparatur lesbaren) Positionsmarkierungen (30,00 mm), der mit einem Gewicht belastet werden kann. Die Apparatur enthält präzise Messsysteme zur Bestimmung der zurückgelegten Weglänge des Kolbens sowie zur Zeit- und Temperaturmessung.

Zur Bestimmung der Viskosität der Kunststoffe zur Herstellung der erfindungsgemäßen Formkörper wurde ein an DIN ISO 1133 angelehntes Verfahren, im folgenden MVI-Methode genannt, verwendet:
Zur Durchführung der Bestimmung wird die Apparatur auf eine festgelegte Temperatur von 380C vorgeheizt. Der vorgetrocknete (150°C, 12h) Kunststoff bzw. Kunststoffcompound (6 g Pulver oder Granulat) wird in den Zylinder eingefüllt und verdichtet. Nach Erreichen der Messtemperatur (380-°C) werden noch 240 s abgewartet. Anschließend wird das Gewicht (10 kg) automatisch aufgelegt und die Schmelze ausfließen lassen. Die Messungen beginnen, wenn die untere Positionsmarkierung auf dem Kolben erkannt wird, und enden, wenn die obere Markierung erkannt wird. Aus der zurückgelegten Weglänge des Kolbens, den Messzeitintervallen (2 s) sowie der bekannten Kolbenfläche wird nun der Volumenfließindex (MVI) über eine Gerätesoftware bestimmt und in der gebräuchlichen Einheit ml/10 min ausgegeben.

Die Vortrockenzeit und -temperatur (150°C, 12h), die Probenmasse (6 g), die Messtemperatur (380°C), das Gewicht (10 kg) und die Messzeitintervalle (2 s) sind Standards, die speziell auf die MVI Bestimmung von PEEK und PEEK-Compounds ausgerichtet wurden. Die Gerätegeometrie und die Wartezeit (240 s) sind in der DIN ISO 1133 festgelegt.

Ein Zusatz von Additiven verursacht prinzipiell eine höhere Viskosität, d.h. kleinere MVI-Werte im Vergleich zu dem MVI-Wert des Ausgangspolymers. Es zeigte sich, dass bei einem Zusatz von 10 bis 30 % (w/w) SiO₂ - Additiven bevorzugt Kunststoffe mit einer Ausgangsviskosität von über 150 ml/ 10 min (MVI-Methode), besonders bevorzugt mit MVI-Werten zwischen 300 und 700 mL/min, geeignet sind. Bei Werten unter 150 mL/min nach MVI-Methode werden die Kunststoffe insbesondere bei Zusatz von 30% Additiven und mehr nach der Compoundierung sehr zäh.

Zur Herstellung der erfindungsgemäßen Formkörper werden die Kunststoffe, sofern Additive zugesetzt werden sollen, zunächst compoundiert. Das bedeutet, sie werden mit den Additiven, wie z.B. Fasern, Partikeln, Farbkörpern, etc. versetzt. Dies erfolgt bevorzugt durch kontrollierte Zugabe der Additive bei gleichzeitiger Verarbeitung über eine Extruderschnecke. Genauere Prozessparameter sind dem Fachmann bekannt und finden sich in Handbüchern, wie beispielsweise in Hensen, Knappe und Potente, "Handbuch der Kunststoffextrusionstechnik, Karl Hanse Verlag, (1986/1989).

Beim Compoundieren wird die spätere Viskosität des Kunststoffes durch die Art der zugegebenen Additive und teilweise auch den Zeitpunkt der Zugabe beeinflusst. Bei einer frühen Zugabe von z.B. Fasern werden diese während der Compoundierung zerkleinert. Beispielsweise können Fasern mit einer Ausgangslänge von 6 mm nach der Compoundierung nur noch eine durchschnittliche Länge von wenigen µm aufweisen.

Zur Verarbeitung mittels 3D Druck werden die compoundierten oder nicht compoundierten Kunststoffe je nach Drucktechnik in flüssiger oder pulverförmiger Form verwendet. Die Größe der Pulverpartikel hängt auch von dem eingesetzten Druckverfahren ab. Beim selektiven Laser-Sintern sind Partikelgrößen zwischen 20 und 250 µm typischerweise geeignet.

Die Durchführung des 3D-Druckens erfolgt nach den bekannten, vorab beschriebenen Methoden.

Auch die Erstellung eines für das 3D-Drucken benötigten CAD Datensatzes ist dem Fachmann bekannt. Geeignet sind beispielsweise STL oder STEP Dateien. Für die Herstellung der erfindungsgemäßen Chromatographiesäule kann der Datensatz z.B. nur den porösen monolithischen Formkörper und die Ummantelung betreffen oder auch beispielsweise Anschlüsse für Lösungsmittelzu- und ablauf enthalten. Der Datensatz kann einen künstlich konstruierten symmetrischen Formkörper mit einer symmetrischen Porenstruktur beschreiben. Der Datensatz kann auch das Abbild eines mittels chemischer Synthese erzeugten und dadurch natürlich unregelmäßig aufgebauten Formkörper beschreiben. CAD Datensätze von mittels chemischer Synthese hergestellten Formkörpern können beispielsweise mittels Computer-Tomographie erzeugt werden.

Zur Verwendung als Chromatographiesäule können die ummantelten porösen monolithischen Formkörper dann mit entsprechenden Anschlussstücken, Filtern, Dichtungen etc. versehen werden. Die Ummantelung kann plan mit dem Sorbens abschließen oder an den Enden überstehen. Derartige Konstruktionen sind für Chromatographiesäulen mit partikulären oder monolithischen Sorbenzien bekannt.

Die porösen monolithischen Formkörper der erfindungsgemäßen Vorrichtung können zudem weiteren Schritten zur Vergrößerung der Oberfläche und/oder der Derivatisierung mit Separationseffektoren unterzogen werden.

Zur Vergrößerung insbesondere der Innenoberfläche der Formkörper können diese mit einer porösen Schicht belegt werden. In einer Ausführungsform wird hierzu der Formkörper mit einer Lösung oder Aufschlämmung vorbehandelt. Die Lösung besteht aus einem Monomersol, das Alkoxysilane enthält. Diese Alkoxysilane können mit der Innenoberfläche des Formkörpers reagieren und/oder dort auspolymerisiert und/oder aufgesintert werden. Auf diese Weise bildet sich eine Beschichtung der Innenoberfläche des Formkörpers, die durch ihren Aufbau und ihre Struktur die Innenoberfläche vergrößert und ihre chemischen Eigenschaften verändert. Geeignete Alkoxysilane sind Tetraalkoxysilane (RO)₄Si, wobei R typischerweise ein Alkyl, Alkenyl oder Aryl- Rest ist, wie C1 bis C20 Alkyl, C2 bis C20 Alkenyl oder C5 bis C20 Aryl, bevorzugt ein C1 bis C8 Alkylrest. Besonders bevorzugt sind Tetraethoxy- und insbesondere Tetramethoxysilan. Genauso kann das Tetraalkoxysilan verschiedene Alkylreste enthalten.

In einer anderen Ausführungsform können statt eines Alkoxysilans oder Mischungen zweier oder mehrerer Alkoxysilane Organoalkoxysilane oder Mischungen von Organoalkoxysilanen mit Tetraalkoxysilanen eingesetzt werden. Geeignete Organoalkoxysilane sind solche, in denen ein bis drei, bevorzugt eine Alkoxygruppen eines Tetraalkoxysilans durch organische Reste, wie bevorzugt C1 bis C20 Alkyl, C2 bis C20 Alkenyl oder C5 bis C20 Aryl ersetzt sind. Weitere Organoalkoxysilane sind z.B. in WO 03/014450 oder US 4,017,528 offenbart. Statt in ihrer monomeren Form können die Alkoxysilane bzw. Organoalkoxysilane auch vorpolymerisiert als z.B. Oligomere eingesetzt werden.

Die Tetraalkoxysilane werden typischerweise als 2 bis 50%ige, bevorzugt 5 bis 25%ige (Gew.%) wässrige Lösung eingesetzt. Organoalkoxysilane werden typischerweise als 2 bis 25%ige, bevorzugt 5 bis 10%ige (Gew.%) Lösung in einem organischen Lösungsmittel wie z.B. Toluol eingesetzt. Die Behandlung des Formkörpers erfolgt bevorzugt bei erhöhter Temperatur zwischen 50 und 150°C, z.B. wird in Toluol unter Rückfluss gekocht. Die Dauer der Behandlung beträgt in der Regel zwischen 1 bis 48 Stunden, typischerweise 2,5 bis 24 Stunden.

In einer anderen Ausführungsform enthält die Lösung zusätzlich Partikel und ist somit eine Partikelsuspension bzw. Aufschlämmung. Die Partikel haben typischerweise einen Durchmesser zwischen 25 nm und 10 µm, bevorzugt zwischen 50 nm und 1µm und bestehen typischerweise aus Kunststoff, Keramik, Glas oder anorganischen Oxiden, wie z.B. Ti-, AI-, Zr- oder Si-Oxiden. Bevorzugt besitzen sie eine hydrophile Oberfläche. Aber auch hydrophob derivatisierte Partikel, z.B. mit C1 - C20 Akylresten sind besonders geeignet, wenn das Monomersol aus Organoalkoxysilanen und oder Mischungen von Organoalkoxysilanen mit Alkoxysilanen besteht. Hier findet bedingt durch hydrophobe Wechselwirkungen die Polymerisation zu Beginn bevorzugt an der Innenoberfläche statt.

Die Partikel können unporös oder porös sein. Geeignet sind sphärische oder auch unregelmässig geformte Partikel. Besonders bevorzugt sind Silica-Partikel mit einem Durchmesser zwischen 50nm und 1µm.

In der Regel werden die Formkörper bei Temperaturen zwischen 25°C und 100° C zwischen 5 Minuten und 24 Stunden mit der Lösung oder Aufschlämmung behandelt. Die Behandlung kann durch Eintauchen des gesamten Formkörpers oder Spülen bzw. Befüllen des Inneren des Formkörpers erfolgen. Anschließend werden die Formkörper aus der Partikelsuspension bzw. Aufschlämmung genommen und ohne weitere Behandlung über mehrere Stunden getrocknet.

In einer anderen Ausführungsform wird die innere Oberfläche der Formkörper mit Reagenzien behandelt, die zumindest zwei, bevorzugt drei oder vier, Funktionalitäten aufweisen. Erfindungsgemäß werden geeignete Reagenzien mit mindestens zwei Funktionalitäten als bifunktionelle Reagenzien bezeichnet. Es wird angenommen, dass mindestens eine Funktionalität mit der Oberfläche des Formkörpers reagiert und mindestens eine Funktionalität für eine weitere Reaktion wie beispielsweise die Anbindung von Separationseffektoren zur Verfügung steht.

Geeignet sind dabei z.B. Alkoxysilane oder Organoalkoxysilane. Besonders bevorzugt sind
- bis-funktionelle Silane der Formel I

   (RO)₁₋₃-Si-(CH₂)n-Si-(OR)₁₋₃ I

   wobei R typischerweise ein Alkyl, Alkenyl oder Aryl- Rest ist, wie C1 bis C20 Alkyl, C2 bis C20 Alkenyl oder C5 bis C20 Aryl, bevorzugt ein C1 bis C8 Alkylrest und
   n bevorzugt 1 bis 8 ist.
   Beispiele für bevorzugte Verbindungen sind BTME (Bis(trimethoxysilyl) ethan mit R = Methyl und n = 2)), Bis(triethoxysilyl)ethan, Bis(triethoxysilyl)methan und Bis(triethoxysilyl)octan.
- mono, di- oder trifunktionelle Alkoxysilane mit einer vierten endständigen Funktion der Formel II

   (RO)ₙR'ₘSi-R* II
wobei R und R' typischerweise unabhängig voneinander ein Alkyl, Alkenyl oder Aryl- Rest ist, bevorzugt ein C1 bis C8 Alkylrest, und R* eine Si-OHreaktive Gruppe, wie eine Amino- oder eine Epoxy-Gruppe aufweist. Das heißt, R* ist z.B. Alkylamino, Alkenylamino oder Arylamino, bevorzugt ein C1 bis C8 Alkylamino oder Glycidoxyalkyl, Glycidoxyalkenyl oder Glycidoxyaryl, bevorzugt C1 bis C8-Glycidoxyalkyl. m ist 0, 1 oder 2, n + m ergibt 3. Beispiele für geeignete Verbindungen der Formel II sind 3-Glycidoxypropyltrimethoxysilan, 3-Glycidoxypropylmethyldimethoxysilan oder 3-Glycidoxypropylmethyldiethoxysilan sowie 3-Aminopropylmethyldiethoxysilan, 3-Aminopropyldimethylethoxysilan oder bevorzugt 3-Aminopropyltriethoxysilan oder 3-Aminopropyltrimethoxysilan.

Die bifunktionellen Reagenzien werden typischerweise als 2 bis 25%ige, bevorzugt 5 bis 10%ige (Gew.%) Lösung in einem organischen Lösungsmittel wie z.B. Toluol eingesetzt. Die Behandlung der Formkörper erfolgt bevorzugt bei erhöhter Temperatur zwischen 50 und 150°C; z.B. wird in Toluol unter Rückfluss gekocht. Die Dauer der Behandlung beträgt in der Regel zwischen 5 Minuten bis 48 Stunden, typischerweise 1 bis 24 Stunden.

Die Behandlung kann durch Eintauchen des gesamten Formkörpers oder Spülen bzw. Befüllen des Inneren des Formkörpers erfolgen. Zum Abschluss wird in der Regel mit einem organischen Lösungsmittel gespült.

Weiterhin ist es möglich, die genannten Möglichkeiten der Oberflächenaktivierung zu kombinieren.

Die kovalente Anbindung von Separationseffektoren erfolgt in der Regel über die auf dem Formkörper vorhandenen funktionellen Gruppen, wie z.B. Hydroxylgruppen, z.B. unter Ausbildung einer Ester- oder bevorzugt einer Ether-Funktion, direkt oder über einen Linker bzw. Abstandshalter. In einer anderen bevorzugten Ausführungsform erfolgt die Verknüpfung mit dem Basismaterial über eine Cer(IV)-katalysierte Pfropfpolymerisation unter Ausbildung einer C-C-Verknüpfung mit dem Basismaterial. Die auf dem Formkörper vorhandenen funktionellen Gruppen, über die die Anbindung der Separationseffektoren erfolgt, können z.B. Gruppen des thermoplastischen Polymers sein, funktionelle Gruppen der Additive oder durch die oben beschriebene Oberflächenaktivierung eingeführt worden sein.

Separationseffektoren sind dem Fachmann auf dem Gebiet der Chromatographie bekannt. Separationseffektoren sind Substituenten, die bereits während der Synthese des Basismaterials oder nachträglich in das Sorbens eingeführt werden können und die Einfluss auf die Oberflächeneigenschaften des Sorbens nehmen. Insbesondere werden durch die gezielte Derivatisierung mit Separationseffektoren Sorbenzien mit bestimmten chromatographischen Eigenschaften erzeugt. Insbesondere können Separationseffektoren folgende endständige Gruppen aufweisen:
a) eine ionische oder ionisierbare Gruppe, z.B.
   - NR⁷R⁸ oder -N⁺R⁷R⁸R⁹,
      worin
      R⁷ und R⁸ unabhängig voneinander
      H, Alkyl mit 1-5 C-Atomen
         und
      R⁹ Alkyl mit 1-5 C-Atomen
      mit der Maßgabe, dass wenn X = -N⁺R⁷R⁸R⁹, R⁷ und R⁸ nicht H sein können,
   - Guanidinium
   - SO₃⁻
   - Carbonsäuren
b) eine hydrophobe Gruppierung, z.B. -OR¹⁰ oder -NHR¹⁰, wobei R¹⁰ C₁-C₂₀-Alkyl, C₆-C₂₅-Aryl, C₇-C₂₅-Alkylaryl oder C₇-C₂₅-Arylalkyl bedeuten, und wobei diese Reste auch mit Nitril oder C₁-C₅-Alkoxy derivatisiert sein können, und wobei auch eine oder mehrere nicht benachbarte CH₂-Gruppen durch NH oder O oder auch eine oder mehrere CH Gruppen durch N ersetzt sein können;
c) eine Metallchelat-Gruppierung;
d) ein thiophiler Rest;
e) ein chiraler Rest.
f) Biomoleküle, wie Proteine (z.B. Antikörper), Peptide, Aminosäuren, Nukleinsäuren, Saccharide, Biotin etc.

Thiophile Reste sind beispielsweise in EP 0 165 912 offenbart.

Soll das Polymer zunächst mit einem universellen Linker versehen werden, kann es z.B. zur Einführung von Epoxy-Gruppen mit Glycidylverbindungen wie Butandioldiglycidylether umgesetzt werden.

Weiterhin kann der poröse monolithische Formkörper der erfindungsgemäßen Vorrichtung als Basismaterial durch Pfropfpolymerisation mit tentakelartigen Strukturen versehen werden, die wiederum die entsprechenden Separationseffektoren tragen oder mit diesen funktionalisiert werden können. Bevorzugt wird die Pfropfung gemäß EP 0 337 144 durchgeführt. Die erzeugte Kette ist linear und über eine Monomereinheit mit dem Basismaterial verknüpft. Dazu wird das erfindungsgemäße Basismaterial in einer Lösung von Monomeren suspendiert, vorzugweise in einer wäßrigen Lösung. Das Aufpfropfen des polymeren Materials wird im Zuge einer üblichen Redoxpolymerisation unter Sauerstoffausschluß bewirkt. Als Polymerisations-Katalysator werden Cer(IV)-Ionen eingesetzt, da dieser Katalysator an der Oberfläche des Basismaterials Radikalstellen bildet, von welchen die Pfropfpolymerisation der Monomere gestartet wird.

Die Polymerisation wird durch Abbruchsreaktionen unter Beteilung der Cer-Salze beendet. Deswegen ist die (mittlere) Kettenlänge durch die Konzentrationsverhältnisse des Basismaterials, des Initiators und der Monomeren beeinflussbar. Weiterhin können einheitliche Monomere oder auch Gemische verschiedener Monomere eingesetzt werden; im letzteren Fall entstehen gepfropfte Copolymerisate.

Die erfindungsgemäßen Chromatographiesäulen können in allen für die analytische oder präparative Chromatographie üblichen Größen hergestellt werden. Sie sind zur Durchführung von chromatographischen Trennungen zweier oder mehrerer Stoffe geeignet und können auch als Vorsäule eingesetzt werden. Für die analytische Chromatographie liegen die Durchmesser der porösen monolithischen Formkörper typischerweise zwischen 0,5 mm und 10 cm, die Längen liegen zwischen 0,5 cm und 50 cm. Für die präparative Anwendung können auch Formkörper mit größeren Abmessungen erzeugt werden.

Wird die Ummantelung der Chromatographiesäule zusammen mit dem porösen Formkörper mittels 3D Druck erzeugt, so hat sie typischerweise eine Wandstärke zwischen 1 und 10 mm, bevorzugt zwischen 1 und 5mm. Ähnliche Wandstärken sind auch für Vorrichtungen zur Probenvorbereitung, wie z.B. Vorrichtungen zur Extraktion geeignet.

Die erfindungsgemäßen Chromatographiesäulen zeigen gute Trenneigenschaften. Auch nach Lagerung in Lösungsmitteln und häufiger Benutzung zeigt sich keine oder nur geringfügige Verschlechterung der Trennleistungen. Insbesondere bei Chromatographiesäulen, deren Ummantelung direkt gleichzeitig mittels 3D Druck hergestellt wurde, zeigt sich eine gute Druckstabilität. Es wurde weiterhin gefunden, dass die erfindungsgemäßen Säulen aus thermoplastischen Kunststoffen auch chromatographische Auftrennungen bei Temperaturen über 30°C ermöglichen. PEEK z.B. hat einen Schmelzpunkt von über 340°C und ist so je nach Derivatisierung mit Additiven und Separationseffektoren für chromatographische Trennungen beispielweise bis 150°C geeignet, so dass mit den erfindungsgemäßen Säulen auch eine chromatographische Auftrennung in der Gasphase möglich ist.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

### Beispiele

### 1) Erstellen eines CAD-files:

Es werden poröse Scheibenelemente mittels geeigneter Software am Bildschirm konstruiert. Diese porösen Scheibenelemente werden dann versetzt übereinander angeordnet bis sie eine poröse Säule mit definierter Dimension (z.B. 50-3mm oder 100x4,6mm) ergeben.

### 2) Durchführung des 3D-Drucks:

Mittels des entsprechend Beispiel 1) erzeugten CAD-files werden die vorgegebenen Strukturelemente unter Verwendung eines geeigneten PEEK-Rohstoffes (z.B. EOS PEEK HP3) auf einem 3D Drucker der Firma EOS (EOSINT P800) gefertigt.

EOSINT P800: Dieses Gerät wird zum Drucken und Fertigen von "high performance plastic components" verwendet. Dieser Drucker verwendet das Prinzip des selektiven Laser Sinterns SLS (selective laser sintering). Der PEEK-Rohstoff wird schichtweise aufgebaut und in jeder Schicht per Laser die Partikel verschmolzen.

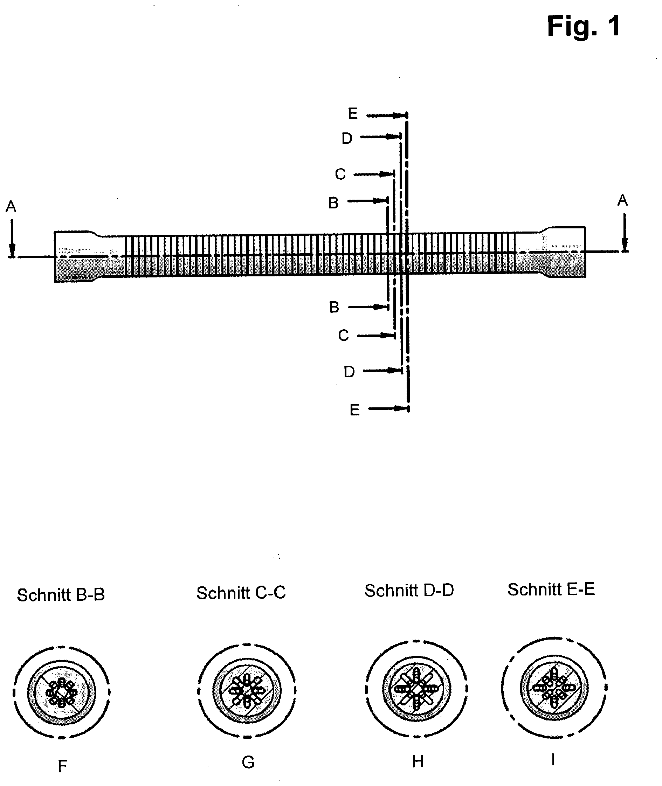

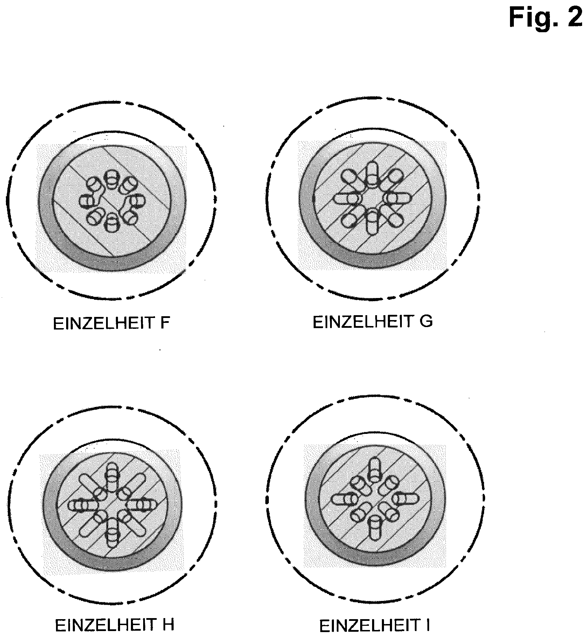

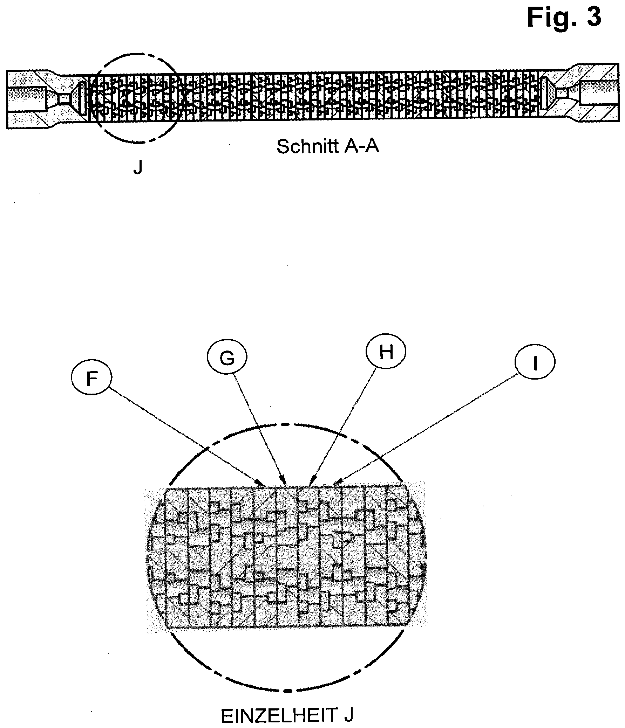

Die Abbildungen 1 bis 3 zeigen schematisch Ausschnitte des erstellen CAD Files. Abbildung 1 zeigt die gesamte Chromatographiesäule mit Anschlüssen für Lösungsmittelzu- und ablauf. Man erkannt den Aufbau aus Schichten. Die Schnitte bzw. Schichten B-B, C-C, D-D und E-E sind in der Säule eingezeichnet. Die Einzelbilder zeigen die Porenstruktur der jeweiligen Schichten. Abbildung 2 zeigt diese Schnitte noch einmal in größerem Format. Einzelheit F zeigt dabei den mit F bezeichneten Schnitt B-B aus Abbildung 1, Einzelheit G den mit G bezeichneten Schnitt C-C etc.. Abbildung 3 zeigt noch einmal die gesamte Säule der Dimension 50x3 mm, wobei die innere Struktur in einem Längsschnitt schematisch dargestellt ist. Der Ausschnitt J mit den in den Abbildungen 1 und 2 gezeigten Schichten C-C (F), D-D (G), E-E (H) und F-F (I) ist noch einmal vergrößert hervorgehoben.

### 3) Chromatographische Trennungen - Vergleich mit monolithischer RP18 Säule

Es erfolgt ein Vergleich der mittel 3D Druck entsprechend Beispiel 2 erzeugten Säule der Dimension 50x3 mm (Säule A) mit einer Chromolith® RP 18e Säule (Merck KGaA, Darmstadt) der gleichen Dimension (Säule B).

**Elutionsbedingungen:**

| | |
|---|---|
| Eluent: | ACN/ Wasser (20/80 bei Säule A) und (35/65 bei Säule B) |
| Fluss: | 1,0 mL/min |
| Det.: | UV254nm Response fast; |
| Temp.: | RT |
| Injvol.: | 1 µL; |
| Probe: | Thioharnstoff und Triphenylen gelöst in Eluent |

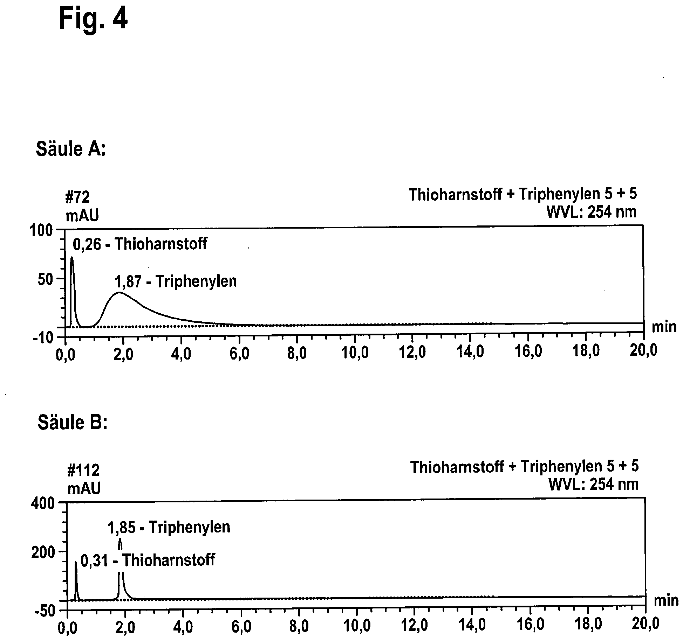

Abbildung 4 zeigt die erhaltenen Chromatogramme. In beiden Fällen kann eine Basislinientrennung der beiden Substanzen erzeugt werden.

Weitere Angaben zu den Trennungen finden sich in den folgenden Tabellen A und B. Tabelle A gibt die Ergebnisse mit Säule A wieder, Tabelle B die für Säule B.

**Tabelle A**

| **Ret.Time** | **Peakname** | **K'** | **Asym(USP)** | **Plates(USP)** |
|---|---|---|---|---|
| min | | | | |
| 0,257 | Thioharnstoff | 0,00 | 1,87 | 39 |
| 1,870 | Triphenylen | 6,28 | 2,92 | 8 |

**Tabelle B**

| **Ret.Time** | **Peakname** | **K'** | **Asym(USP)** | **Plates(USP)** |
|---|---|---|---|---|
| min | | | | |
| 0,312 | Thioharnstoff | 0,00 | 1,78 | 459 |
| 1,853 | Triphenylen | 4,94 | 2,44 | 1569 |

### 4. Einfluss des Eluenten

Mit den entsprechend Beispiel 2 erzeugten Chromatographiesäulen der Dimension 50x3 mm werden chromatographische Auftrennungen mit verschiedenen Eluentenzusammensetzungen durchgeführt.

**Elutionsbedingung A:**

| Thioharnstoff +Triphenylen 1:1 | |
|---|---|
| Eluent: | ACN/ Wasser 80/20 |
| Bedg.: | 1,0 mL/min, UV254nm, RT |
| Injvol.: | 2µL |
| Probe: | Thioharnstoff +Triphenylen in Eluent |

**Elutionsbedingung B:**

| Thioharnstoff +Triphenylen 1:1 | |
|---|---|
| Eluent: | ACN/ Wasser 20/80 |
| Bedg.: | 1,0 mL/min, UV254nm, RT |
| Injvol.: | 2µL |
| Probe: | Thioharnstoff +Triphenylen in Eluent |

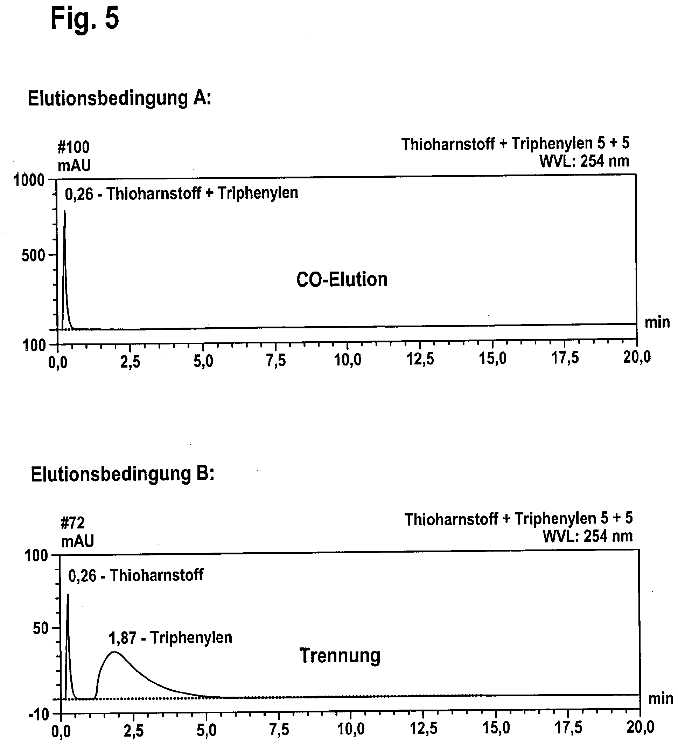

Abbildung 5 zeigt die unter Bedingung A und B erhaltenen Chromatogramme. Es zeigt sich, dass bei dem Eluenten A (ACN/ Wasser (80/20; V/V) eine Co-Elution der beiden Stoffe Thioharnstoff undTriphenylen erfolgt, während mit dem Eluenten B (ACN/ Wasser (20/80; V/V) eine Auftrennung erhalten wird.

### 5. Gradiententrennung:

Mit den entsprechend Beispiel 2 erzeugten Chromatographiesäulen der Dimension 50x3 mm wird eine Gradiententrennung mit den folgenden Bedingungen durchgeführt:

| Thioharnstoff +Triphenylen 1:1 | |
|---|---|
| Eluent: | ACN/ Wasser 10/90 in 10min auf 20/80 |
| Bedg.: | 1,0 mL/min, UV254nm, RT |
| Injvol.: | 2µL |
| Probe: | Thioharnstoff +Triphenylen in Eluent |

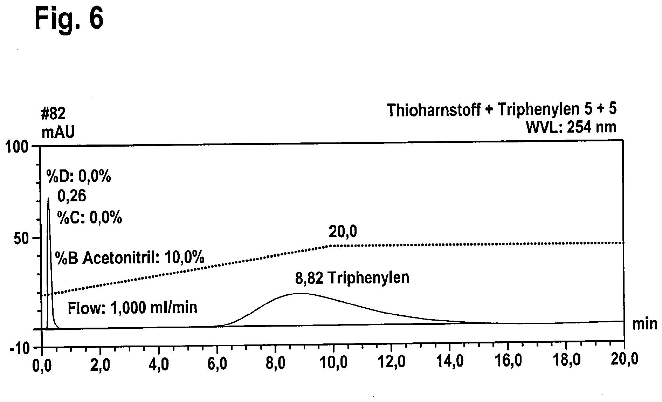

Abbildung 6 zeigt das erhaltene Chromatogramm.

Es zeigt sich, dass durch die Gradientenelution eine größere Auftrennung der beiden Substanzen erzeugt werden kann. Somit verhält sich die 3D gedruckte PEEK Säule chromatographisch wie eine RP-Säule.

### 6. Einfluss der Temperatur

Mit den entsprechend Beispiel 2 erzeugten Chromatographiesäulen der Dimension 50x3 mm wird eine chromatographische Trennung bei verschiedenen Temperaturen durchgeführt:

**Elutionsbedingungen:**

| | |
|---|---|
| Eluent: | Methanol/ Wasser 30/70 |
| Bedg.: | 1,0 mL/min, UV254nm, RT |
| Injvol.: | 2µL |
| Probe: | Thioharnstoff +Triphenylen in Eluent |

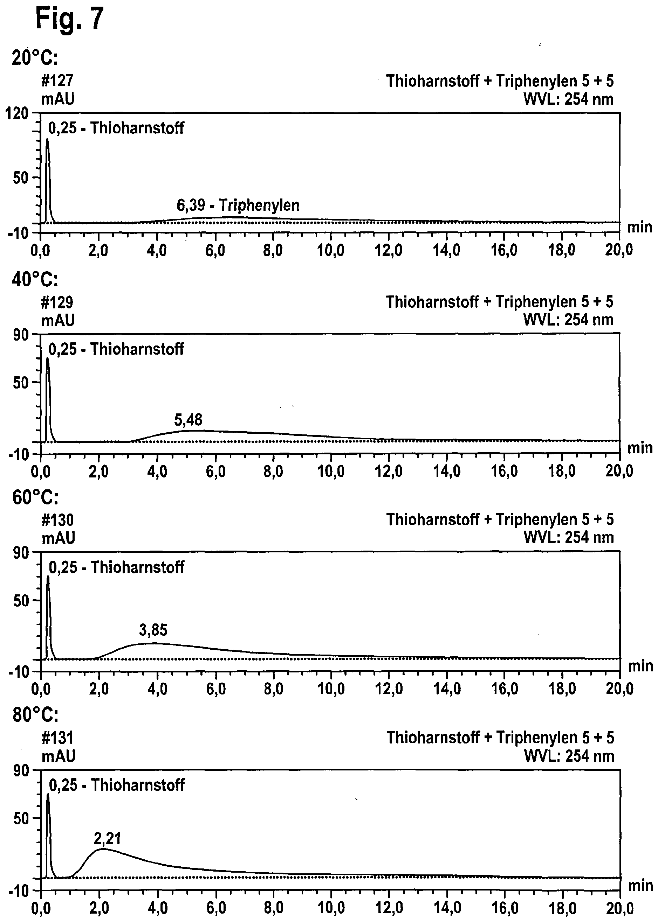

Die Trennungen werden bei 20°C, 40°C, 60°C und 80°C durchgeführt. Die erhaltenen Chromatogramme sind in Abbildung 7 dargestellt.

Bei Erhöhung der Temperatur verkürzen sich die Retentionszeiten durch einen beschleunigten Massentransfer. Das entspricht dem in der Chromatographie zu erwartenden Verhalten.

### 7. Durchführung des 3D-Drucks für eine Chromatographiesäule der Dimension 100x4,6 mm:

Mittels des entsprechend Beispiel 1) erzeugten CAD-files werden die vorgegebenen Strukturelemente unter Verwendung eines geeigneten PEEK-Rohstoffes (z.B. EOS PEEK HP3) auf einem 3D Drucker der Firma EOS (EOSINT P800) gefertigt.

Dieser Drucker verwendet das Prinzip des selektiven Laser Sinterns SLS (selective laser sintering). Der PEEK-Rohstoff wird schichtweise aufgebaut und in jeder Schicht per Laser die Partikel verschmolzen.

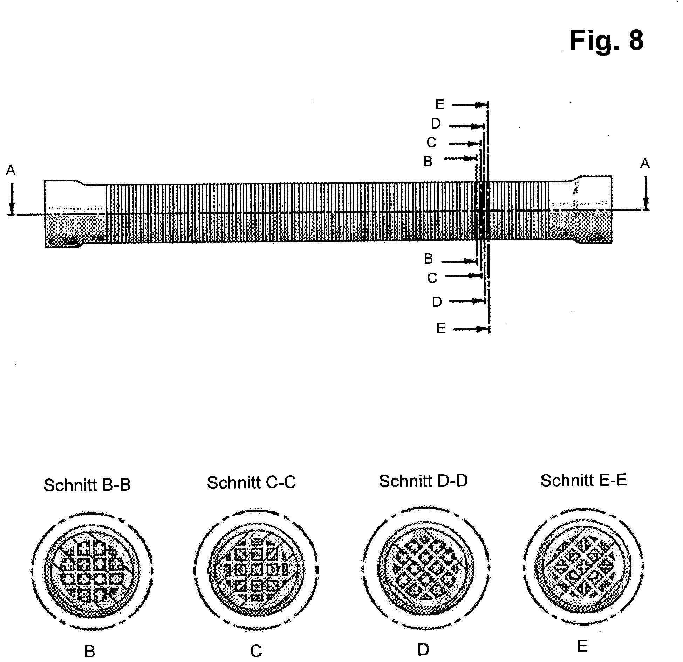

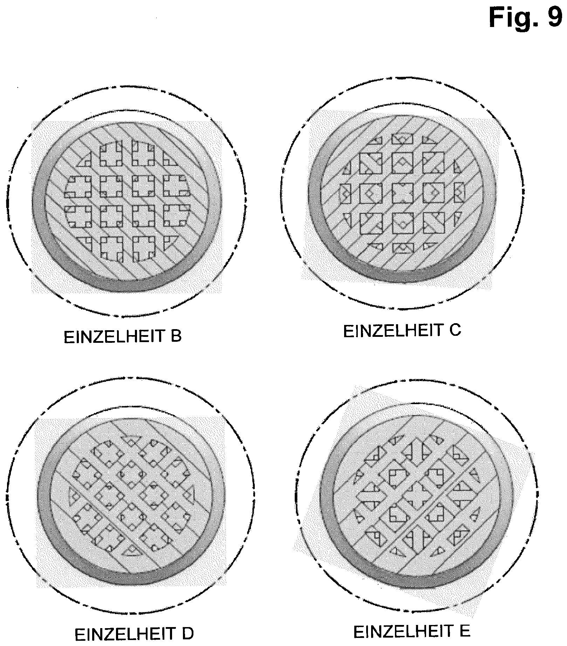

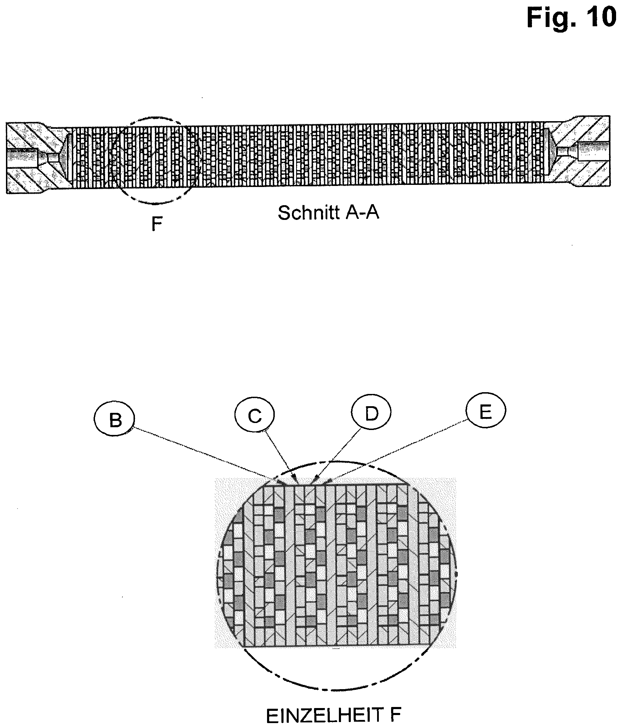

Die Abbildungen 8 bis 10 zeigen schematisch Ausschnitte des erstellen CAD Files. Abbildung 8 zeigt die gesamte Chromatographiesäule mit Anschlüssen für Lösungsmittelzu- und ablauf. Man erkannt den Aufbau aus Schichten. Die Schnitte bzw. Schichten B-B, C-C, D-D und E-E sind in der Säule eingezeichnet. Die Einzelbilder zeigen die Porenstruktur der jeweiligen Schichten. Abbildung 9 zeigt diese Schnitte noch einmal in größerem Format. Einzelheit B zeigt dabei den mit B bezeichneten Schnitt B-B aus Abbildung 8, Einzelheit C den mit C bezeichneten Schnitt C-C etc.. Abbildung 10 zeigt noch einmal die gesamte Säule der Dimension 100x4,6 mm, wobei die innere Struktur in einem Längsschnitt schematisch dargestellt ist. Der Ausschnitt F mit den in den Abbildungen 8 und 9 gezeigten Schichten B-B (B), C-C (C), D-D (D) und E-E (E) ist noch einmal vergrößert hervorgehoben.

### 8. Chromatographische Trennung einer Substanzmischunq auf fünf 3D-PEEK Säulen (100x4,6mm) gekoppelt zu einer Gesamtsäule der Dimension 500x4,6mm

Mit den entsprechend Beispiel 7 erzeugten Chromatographiesäulen der Dimension 100x4,6 mm wird eine chromatographische Trennung durchgeführt. Dabei sind fünf Säulen zusammen gekoppelt.

**Elutionsbedingungen:**

| | |
|---|---|
| Eluent: | ACN/ Wasser 20/80 |
| Bedg.: | 1,0 mL/min, UV254nm, |
| Temp.: | RT |
| Injvol.: | 1µL |
| Probe: | Thioharnstoff, o-Terphenyl, Triphenylen in Eluent |

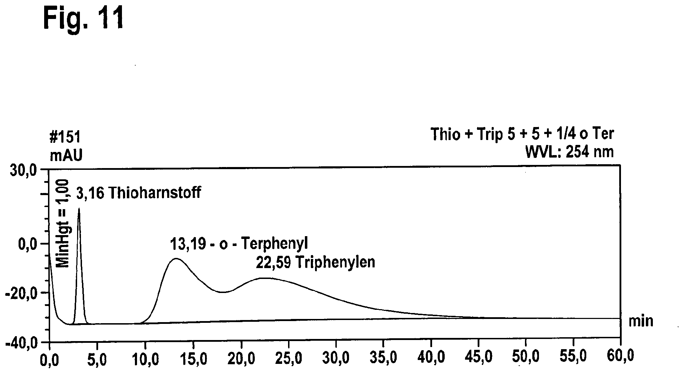

Das erhaltene Chromatogramm ist in Abbildung 11 dargestellt. Es kann eine Trennung der 3 Stoffe erzeugt werden.

Weitere Daten finden sich in Tabelle C:

**Tabelle C**

| **No.** | **Ret.Time** | **Peakname** | **K'** | **Asym(USP)** | **Plates(USP)** |
|---|---|---|---|---|---|
| | min | | | | |
| 1 | 3,160 | Thiohamstoff | 0,00 | 1,05 | 186 |
| 2 | 13,187 | o-Terphenyl | 3,17 | n.a. | 18 |
| 3 | 22,592 | Triphenylen | 6,15 | n.a. | 8 |

## Patentansprüche

1. Chromatographiesäule zumindest umfassend einen porösen monolithischen Formkörper als Sorbens und eine Ummantelung, **dadurch gekennzeichnet, dass** der Formkörper und die Ummantelung zusammen aus demselben thermoplastischen Polymer mittels 3D Druckverfahren hergestellt wurden, wobei das thermoplastische Polymer Polyetheretherketon (PEEK) oder Polyphenylensulfid ist.

2. Chromatographiesäule nach Anspruch 1, **dadurch gekennzeichnet, dass** die Schmelztemperatur des thermoplastischen Polymers größer ist als 150°C.

3. Chromatographiesäule nach einem oder mehreren der Ansprüche 1 bis 2, **dadurch gekennzeichnet, dass** das thermoplastische Polymer Additive enthält, wobei die Additive Fasermaterialien, anorganischen Materialien, Pigmente oder anorganische Oxide oder Mischungen davon sind.

4. Chromatographiesäule nach einem oder mehreren der Ansprüche 1 bis 3, **dadurch gekennzeichnet, dass** der poröse monolithische Formkörper Makroporen mit einem Durchmesser zwischen 0,1 und 10000µm, mittels Quecksilberporosimetrie gemessen, aufweist, die als Durchflussporen dienen, sowie Mesoporen mit einem Porendurchmesser zwischen 2 und 500 nm, mittels Stickstoffadsorption/desorption nach BET ermittelt.

5. Chromatographiesäule nach einem oder mehreren der Ansprüche 1 bis 4, **dadurch gekennzeichnet, dass** der poröse monolithische Formkörper mit Separationseffektoren modifiziert ist, wobei die Separationseffektoren folgende endständigen Gruppen aufweisen können:
a) eine ionische oder ionisierbare Gruppe
b) eine hydrophobe Gruppierung
c) eine Metallchelat-Gruppierung;
d) ein thiophiler Rest;
e) ein chiraler Rest;
f) Biomoleküle

6. Die Verwendung einer Chromatographiesäule nach einem oder mehreren der Ansprüche 1 bis 5 zur Auftrennung mindestens zweier Stoffe.

7. Die Verwendung nach Anspruch 6, **dadurch gekennzeichnet, dass** die Auftrennung chromatographisch erfolgt.

8. Verwendung nach Anspruch 7, **dadurch gekennzeichnet, dass** die chromatographische Auftrennung bei Temperaturen über 30°C erfolgt.

## Claims

1. Chromatography column at least comprising a porous monolithic moulding as sorbent and a cladding, **characterised in that** the moulding and the cladding have been produced together from the same thermoplastic polymer by means of 3D printing processes, where the thermoplastic polymer is polyether ether ketone (PEEK) or polyphenylene sulfide.

2. Chromatography column according to Claim 1, **characterised in that** the melting point of the thermoplastic polymer is greater than 150°C.

3. Chromatography column according to one or more of Claims 1 to 2, **characterised in that** the thermoplastic polymer comprises additives, where the additives are fibre materials, inorganic materials, pigments or inorganic oxides or mixtures thereof.

4. Chromatography column according to one or more of Claims 1 to 3, **characterised in that** the porous monolithic moulding has macropores having a diameter between 0.1 and 10,000 µm, measured by means of mercury porosimetry, which serve as through-flow pores, and meso-pores having a pore diameter between 2 and 500 nm, determined in accordance with BET by means of nitrogen adsorption/desorption.

5. Chromatography column according to one or more of Claims 1 to 4, **characterised in that** the porous monolithic moulding has been modified by means of separation effectors, where the separation effectors can have the following terminal groups:
a) an ionic or ionisable group;
b) a hydrophobic group;
c) a metal chelate group;
d) a thiophilic radical;
e) a chiral radical;
f) biomolecules.

6. Use of a chromatography column according to one or more of Claims 1 to 5 for the separation of the least two substances.

7. Use according to Claim 6, **characterised in that** the separation takes place chromatographically.

8. Use according to Claim 7, **characterised in that** the chromatographic separation takes place at temperatures above 30°C.

## Revendications

1. Colonne de chromatographie comprenant au moins un moulage monolithique poreux en tant que sorbant et un gainage, **caractérisée en ce que** le moulage et le gainage ont été produits ensemble à partir du même polymère thermoplastique au moyen de processus d'impression 3D, où le polymère thermoplastique est le polyéther éther cétone (PEEK) ou le sulfure de polyphénylène.

2. Colonne de chromatographie selon la revendication 1, **caractérisée en ce que** le point de fusion du polymère thermoplastique est supérieur à 150° C.

3. Colonne de chromatographie selon une ou plusieurs des revendications 1 et 2, **caractérisée en ce que** le polymère thermoplastique comprend des additifs, où les additifs sont des matériaux fibreux, des matériaux inorganiques, des pigments ou des oxydes inorganiques ou des mélanges de ceux-ci.

4. Colonne de chromatographie selon une ou plusieurs des revendications 1 à 3, **caractérisée en ce que** le moulage monolithique poreux comporte des macropores qui présentent un diamètre de pore entre 0,1 et 10 000 µm, lequel diamètre est mesuré au moyen d'une porosimétrie au mercure, lesquels macropores jouent le rôle de pores à écoulement au travers, et comporte des mésopores qui présentent un diamètre de pore entre 2 et 500 nm, lequel diamètre est déterminé conformément au procédé BET au moyen d'une adsorption/désorption d'azote.

5. Colonne de chromatographie selon une ou plusieurs des revendications 1 à 4, **caractérisée en ce que** le moulage monolithique poreux a été modifié au moyen d'effecteurs de séparation, où les effecteurs de séparation peuvent comporter les groupes terminaux qui suivent :
a) un groupe ionique ou pouvant être ionisé ;
b) un groupe hydrophobe ;
c) un groupe chélate de métal ;
d) un radical thiophilique ;
e) un radical chiral ;
f) des biomolécules.

6. Utilisation d'une colonne de chromatographie selon une ou plusieurs des revendications 1 à 5 pour la séparation d'au moins deux substances.

7. Utilisation selon la revendication 6, **caractérisée en ce que** la séparation est effectuée chromatographiquement.

8. Utilisation selon la revendication 7, **caractérisée en ce que** la séparation chromatographique est effectuée à des températures au-delà de 30° C.
